# EUROPEAN PATENT SPECIFICATION

(11) **EP 1 842 661 B1**
(45) Date of publication and mention of the grant of the patent: **01.12.2010**
(21) Application number: 06712282.0
(22) Date of filing: 24.01.2006
(51) Int. Cl.: B32B 7/02, B32B 27/06, B32B 27/36

(54) **DECORATION SHEET AND DECORATION BOARD EMPLOYING IT**
DEKORATIONSFOLIE UND DAMIT HERGESTELLTES DEKORATIONSBRETT
FEUILLE DECORATIVE ET PANNEAU DECORATIF SUR LEQUEL LA FEUILLE EST APPOSEE

(30) Priority: 24.01.2005 JP 2005015198
(43) Date of publication of application: 10.10.2007
(73) Proprietor: Dai Nippon Printing Co., Ltd., Tokyo 162-8001 (JP)
(72) Inventor: KUWAHARA, Yuji c/o Dai Nippon Printing Co., Ltd., Shinjuku-ku, Tokyo, 1628001 (JP); ORIKASA, Toshiyuki c/o Dai Nippon Printing Co., Shinjuku-ku, Tokyo, 1628001 (JP); NAKAHARA, Atsushi c/o Dai Nippon Printing Co.,, Shinjuku-ku, Tokyo, 1628001 (JP); MUKAIYAMA, Tomoaki, hama-shi, Kanagawa, 2260022 (JP)
(74) Representative: Henkel, Feiler & Hänzel
(86) International application number: PCT/JP2006/301066
(87) International publication number: WO 2006/078038

(56) References cited:
- WO-A-97/22474
- WO-A-2004/106062
- JP-A- 05 278 166
- JP-A- 2001 129 928
- JP-A- 2004 291 433
- DATABASE WPI Week 200505 Thomson Scientific, London, GB; AN 2005-042472 XP002484861 & JP 2004 291433 A (DAINIPPON PRINTING CO LTD) 21 October 2004 (2004-10-21)
- DATABASE WPI Week 199347 Thomson Scientific, London, GB; AN 1993-374178 XP002484890 & JP 05 278166 A (DAINIPPON PRINTING CO LTD) 26 October 1993 (1993-10-26)

## Description

### Technical field

This invention relates to the decorative sheet and decorative board which are used for the interior of a building, the interior of fittings, the interior of vehicles, etc., particularly, to the decorative sheet and decorative board which can be preferably used for a part where a high design nature is required, such as a built-in kitchen unit.

### Background art

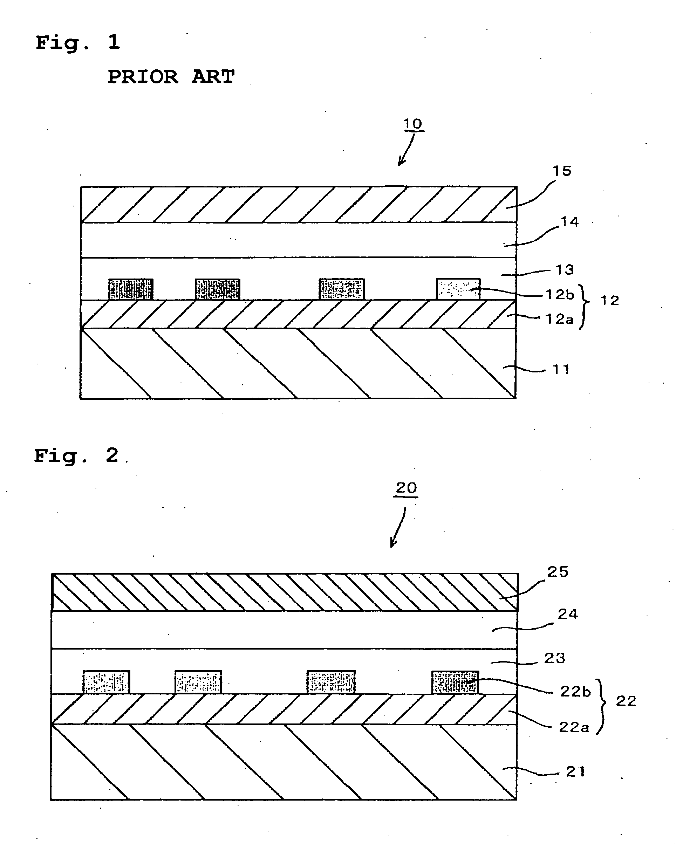

Fig. 1 is a schematic sectional view showing the constitution of the conventional decorative sheet.

As shown in Fig. 1, the conventional decorative sheet 10 has a constitution in which a substrate 11, the coloring layer 12, an adhesive layer 13, and an transparent resin layer 14 are laminated one by one, and is used for the interior of a building, the interior of fittings, the interior of vehicles, etc. (For example, see Patent literature 1).

Moreover, forming the ultraviolet curing type resin layer 15 as a topcoat layer on the above mentioned transparent resin layer 14 is also performed in order to give abrasion resistance, scratch resistance, contamination resistance, chemical resistance, etc., to the decorative sheet concerned. (Patent literature 1) JP 10 - 258488 A

JP 2004-291433 discloses a decorative sheet comprising a base material sheet, an ink layer, an adhesive layer, a transparent resin layer and an electron beam cured resin layer as a surface protective layer.

### Disclosure of the Invention

### Problems to be solved by the invention

However, when the ultraviolet curing type resin layer 15 was formed as a topcoat layer as mentioned above, and the light of a fluorescent lamp was irradiated, there was a case that rainbow - colored interference fringes were reflected on the decorative sheet surface. If the rainbow - colored interference fringes concerned glance, they may give an impression that the surface is dirty with oil to a person, and thus they are not desirable. In particular, when the decorative sheet concerned is of a mirror surface finish, or the color of the coloring layer concerned is a deep primary color (for instance, navy blue color, red, yellow, etc.), the problem of interference fringes appears notably.

In recent years, the problem of the above mentioned interference fringes cannot be disregarded because the decorative sheet of being the mirror surface finish and the primary color is used in many cases (for example, built-in kitchen unit etc.).

In such cases, although it is possible to reduce the problem of interference fringes by enlarging thickness of an ultraviolet curing type resin layer, a new problem that a crack will appear in the ultraviolet curing type resin layer may arise when the decorative sheet concerned is applied to a curved surface.

The present invention has been made in such a situation, and the main challenge of the present invention is to provide a decorative sheet in which the rainbow - colored interference fringes caused by irradiation with lights such as fluorescent lamp are not seen even if the mirror surface finish or the coloring layer of primary color is adapted, and in which the crack does not appear even if the decorative sheet concerned is applied to a curved surface, and to provide a decorative board using thereof.

### Means for solving the problem

The present invention for solving the above mentioned problem is a decorative sheet which comprises a substrate, a coloring layer, an adhesive layer, and a transparent resin layer, and is characterized in that an interference prevention layer formed from a coating composition comprising an electron beam curing type resin as a main ingredient, silicone (meth)acrylate, and colloidal silica particles having a diameter of 10 - 50 nm, is provided on a surface of the transparent resin layer, the surface being in opposite side to another surface being in contact with the coloring layer or the adhesive layer.

Moreover, to 100 parts by weight of the electron beam hardening type resin , 0.3-10 parts by weight of the silicone (meth)acrylate, and 1 - 20 parts by weight of the silica particles may be included.

Moreover, in the decorative seat of the present invention, it is desirable that the transparent resin layer comprises a polyester resin

Moreover, this invention for solving the above mentioned problems is a decorative board which is characterized in that the decorative sheet claimed in anyone of Claims 1 to 4 is adhered to a base board as adherend through an adhesive agent.

### Effect of invention

According to the decorative sheet of this invention, since the interference prevention layer which comprises an electron beam hardening type resin is formed on the surface, the rainbow - colored interference fringes caused by irradiation with lights such as fluorescent lamp are not seen even if the mirror surface finish or the coloring layer of primary color is adapted. Moreover, by providing the interference prevention layer concerned, the abrasion resistance, the scratch resistance, the contamination resistance, the chemical resistance, etc. can also be brought to the decorative sheet.

Moreover, by including a silicone (meth) acrylate and silica particulates contain into the electron beam curing type resin which constitutes the interference prevention layer which provides the above mentioned effects, the fingerprint marks produced when a user touches the decorative sheet surface concerned by hand can be easily wiped off, and thus the decorative sheet becomes easy to hold high design nature.

Further more, by using polyester resin as the transparent resin layer which constitutes a decorative sheet, harmful gas, such as gaseous chlorine, does not emit to environment on the disposal of the decorative sheet, and thus the safety to the circumference environment at the time of disposal can be improved.

### Brief explanation of drawings

[Fig. 1] is a schematic sectional view showing the constitution of the conventional decorative sheet.
[Fig. 2] is a schematic sectional view showing the constitution of one example of the decorative sheet according to the present invention.

### Explanation of numerals

- 10, 20: Decorative seat
- 11, 21: Substrate
- 12, 22: Coloring layer
- 13, 23: Adhesive layer
- 14, 24: Transparent resin layer
- 15: Ultraviolet curing type resin layer
- 25: Interference prevention layer

### Best Mode for carrying out the invention

Now, the decorative seat according to the present invention will be described referring to the drawings.

Fig.2 is a schematic sectional view showing the constitution of one example of the decorative sheet according to the present invention.

As shown in Fig. 2, the decorative sheet 20 according to the present invention comprises a substrate 21, a coloring layer 22 which comprises a solid coloring layer 22a and a design coloring layer 22b, an adhesive layer 23 and a transparent resin layer 24 are layered in order, and in which an interference prevention layer 25 which comprises an electron beam curing type resin is provided on a surface of the above mentioned transparent resin layer 24, the surface being in opposite side to another surface being in contact with the coloring layer 23 or the adhesive layer 22.

The decorative seat 20 according to the present invention will be explained for individual components as follows.

### (Substrate)

Substrate21 is indispensable on the decorative sheet according to the present invention, and serves as a base of a decorative sheet.

As a material used for the substrate 21, polyolefin type resins, polyester type resins, acrylic type resins, polyvinyl chloride, etc., can be mentioned, for example. Among these, it is desirable to use polyolefin type resin or polyester type resin. These materials show high safety because the chlorine type gas is not generated when incinerating and disposing of the decorative seat after it is manufactured, and desirably used from respect of the environment. Moreover, the colored polyolefin type resin is used particularly preferably. By adapting this material, it becomes possible to ensure the stability of the hue of the pattern coloring layer 22b to be formed on the surface of a decorative sheet. Further, even when the hue of the surface of the substrate to which the decorative seat is adhered shows variations, the variations in the hue can be excellently concealed by this material.

As the polyolefin type resin, high crystalline non-elastic polyolefin type resins such as polyethylene (low density or high density), polypropylene, polymethyl pentene, polybutene, ethylene - propylene copolymer, propylene - butene copolymer, etc.; or various olefin type thermoplastic elastomers are adaptable. As the olefin type thermoplastic elastomer, materials mentioned in the following (1) - (7) are adaptable.

(1) Soft polypropylene as described in JP H06 - 23278 B (1994) which is a mixture of (A) 10 - 90 % by weight of atactic polypropylene, as a soft segment, of which number average molecular weight (Mn) is not less than 25,000 and of which ratio (Mw/Mn) of number average molecular weight (Mn) and weight average molecular weight (Mw) is ≤ 7, and which is soluble to boiled heptane, and (B) 90 - 10 % by weight of isotactic polypropylene, as a hard segment, of which melt index is 0.1 - 4 g/10 minutes and which is insoluble to the boiled heptane. Among such olefin type thermoplastic elastomers, a mixture of isotactic polypropylene and atactic polypropylene, in which the mixing ratio of isotactic polypropylene and atactic polypropylene is, as the weight ratio of atactic polypropylene, not less than 5 % by weight and not more than 50 % by weight, is desirable because it hardly causes the so-called "necking", and it has good applicability to the molding by heating or pressurization into various shapes, and to the embossing.

Although the propylene type elastomer of the olefin type thermoplastic elastomer itself was already well known, when used for the conventionally well known purpose, such as the packing container, one in which the weight ratio of the atactic polypropylene as the soft segment is not more than 5% by weight was mainly used. However, when it was going to be used for usages in which V-cut processing is applied, or in which a certain three - dimensional configuration or concavo - convex configuration was required, the necking was caused similarly as above and thus the processing can not complete in success. Then, by setting the weight ratio of atactic polypropylene to be in the range of not less than 5 % by weight in the polypropylene type olefin type elastomer as being contrary to the design of the conventional composition, it is possible to prevent the uneven deformation of sheet due to the V-cut processing or the necking on the molding to the three - dimensional configuration or concavo - convex configuration, and as a result of this prevention it is also possible to eliminate creases and distortions of desired pattern. Particularly, when the weight ratio of atactic polypropylene is in the range of not less than 20 % by weight, more preferable results can be provided. On the other hand, if the weight ratio of atactic polypropylene increases too much, the sheet itself becomes susceptible to deformation. Thus, when the sheet passes through a printing machine, the sheet causes the deformation, and which may bring distortions of the desired pattern, or cause a misregister in the multicolor process. Moreover, since it becomes easy to be torn also at the time of fabrication, it is not desirable. As the upper limited of the weight ratio of the atactic polypropylene, when a decorative layer, etc. are printed by using the conventional rotary press, such as rotogravure printing, or when adopting the emboss processing of a sheet, the vacuum forming, the V-cut processing, the simultaneous injection - molding and lamination, etc., not less than 40% by weight, more preferably not less than 50% by weight is preferable.

### (2) Thermoplastic elastomer which comprises ethylene - propylene - butene terpolymer resin.

As the butene, three kinds of structural isomers, 1-butene, 2-butene, and isobutylene may be used. As the terpolymer, a random terpolymer which includes an amorphous part may be mentioned. The following (i) - (iii) are enumerated as desirable concrete examples of the above mentioned ethylene - propylene - butene terpolymer.

### (i) The one which is disclosed in JP - H09 - 111055 - A (1997).

This is a random copolymer which comprise ethylene - propylene - butene terpolymer. As for the weight ratio of the monomers, the propylene is set to be not less than 90 by weight. As for the melt flow rate, it is preferable to be 1 - 50 g/10 minutes at 230 °C and at 2.16 kg. Then, to 100 parts by weight of the random terpolymer, 0.01 - 50 parts by weight of a transparent nucleating agent of which the principal ingredient is a phosphoric aryl ester compound, and 0.003 - 0.3 part of a fatty acid amide having a carbon number in the range of 12 - 22 are kneaded by fusion.

### (ii) The one which is disclosed in JP- H05 - 77371 -A (1993).

This is an ethylene - propylene - 1-butene terpolymer, in which 80 - 0 % by weight of crystalline polypropylene is added to 20 - 100 % by weight of amorphous polymer of which propylene ingredient content is not less than 50 % by weight.

### (iii) The one which is disclosed in JP - H07 - 316358 - A (1995).

This is an ethylene - propylene - 1-butene terpolymer, in which 0.5 % by weight of an oil gelling agent such as N-acyl amino acid amine salt, or N-acyl amino acid ester is added to a composition in which 80 - 0 % by weight of crystalline polypropylene such as isotactic polypropylene is added to 20 - 100 % by weight of low crystalline polymer of which propylene and/or 1-butene content is not less than 50 % by weight.

Incidentally, the ethylene - propylene- butene terpolymer may be used singly, or the above mentioned (i) - (iii) polymer may be used in combination with the other polypropylene type resin if necessary.

(3) Olefin type elastomer as described in JP - SHO53 - 21021 -B (1978), inwhich (A) anolefinpolymer (crystallinepolymer) such as polyethylene, polypropylene, or polymethyl terpene, etc., as a hard segment and (B) a mono-olefin copolymer rubber such as partially cross - linked ethylene - propylene copolymer rubber, unsaturated ethylene - propylene - disconjugate diene terpolymer rubber, etc., as a soft segment are uniformly blended and mixed, wherein the mixing rate of mono - olefin rubber/olefin polymer is set to be in the range of 50/50 - 90/10 (weight ratio).

(4) Olefin type elastomer as described in JP - SHO53 - 34210 - B (1978), in which (B) an uncross - linked mono-olefin copolymer rubber (soft segment), and (A) an olefin type copolymer (crystalline, hard segment) and a cross - linking agent are mixed, heated and put under a shearing stress in order that a part of them are dynamically cross - linked.

(5) Olefin type elastomer as described in JP - SHO56-15741 - B (1981), in which (A) a peroxide - degradable type olefin polymer (hard segment) such as isotactic polypropylene, propylene - ethylene copolymer, propylene - 1-butene copolymer, etc., which can degrade its molecular weight so as to increase its fluidity when mixed and heated with a peroxide; (B) a peroxide cross linkable type mono-olefin copolymer rubber (soft segment) such as ethylene - propylene copolymer rubber, ethylene - propylene - disconjugate diene terpolymer rubber, etc. , which can cross-link so as to decrease its fluidity when mixed and heated with a peroxide; (C) a peroxide non-cross linkable type hydrocarbon rubber (soft segment which also functions as fluidity improving agent) such as polyisobutylene, butyl rubber, etc., which does not cross-link and vary in its fluidity when mixed and heated with a peroxide; and (D) a mineral oil type softener such as paraffin type, naphthene type, aromatic type, etc., are mixed, and dynamically heat treated in the presence of an organic peroxide, wherein the blending ratio of (C) and/or (D) is 5 - 100 parts by weight, when the ratio of (A) is 90 - 40 parts by weight, the (B) is 10 - 60 parts by weight, and (A)+(B)=100.

(6) The ethylene - styrene-butene terpolymer as disclosed in JP - H02 - 139232 - A (1990).

(7) Olefin type thermoplastic elastomer, which has hydroxide group (s) and/or carboxyl group (s) as polar group (s) which is introduced to the elastomer as described in above (1) - (6). For instance, an olefin type thermoplastic elastomer into which the hydroxide group is introduced by graft polymerization of ethylene - vinyl alcohol copolymer, or the like; or an olefin type thermoplastic elastomer into which the carboxyl group is introduced by copolymerization with maleic acid, fumaric acid, itaconic acid, or the like, may be used. With respect to the hydroxide group and carboxyl group, it is possible to use either one or both of them in combination. These polar groups can bring a function of improving the adhesiveness between the decorative layer such as the design printing layer, and another layer such as adhesive layer.

As polyolefin type resin films which consist of these polyolefin type resins, there are two types, namely, oriented type film and non-oriented type film. Between them, the non-oriented type film is used preferably. Since the non-oriented type film has flexibility, and it excels in processing aptitude, such as wrapping, V-cut processing, vacuum forming, and simultaneous injection molding and lamination, and it excels also in thermal shrinkage percentage, it is suitably used as the substrate 21.

As acrylic type resins, resins which each comprises monopolymer or copolymer which includes (meth)acrylic ester(s), such as polymethyl (meth)acrylate, polyethyl (meth)acrylate, polypropyl (meth)acrylate, polybutyl (meth) acrylate, methyl (meth) acrylate-butyl (meth) acrylate copolymer, ethyl (meth)acrylate - butyl (meth)acrylate copolymer, ethylene - methyl (meth)acrylate copolymer, styrene - methyl (meth)acrylate copolymer, , etc., are enumerated. Here, the term "(meth)acrylate" refers to acrylate or methacrylate. Such acrylic type resin (s) are used singly or in a mixer of two or more species for the substrate 21 as being in a single layer or laminated body of two or more layers.

As polyester resins, for instance, thermoplastic polyester resins such as polyethylene terephthalate, polybutylene terephthalate, ethylene terephthalate - isophthalate copolymer, and polyarylate, etc., are enumerated as a polyester resin

Moreover, to the material for the substrate 21 mentioned above, various additives such as coloring agent, bulking agent, blowing agent, a flame retardant, lubricant, antioxidant, ultraviolet rays absorbent, and photo-stabilizer may be added, if necessary.

The coloring agent used as an additive plays the role to give a color necessitated for the decorative seat to the substrate 1. The coloring agent can be selected according to the usage, and the substrate 21 may be colored to colored transparent, or to colored opacity. Generally, because concealing the surface of the adherence body is necessary, it is desirable to assume the substrate 1 to be colored opacity by the coloring agent. As the coloring agent, inorganic pigments such as titanium white, zinc white, red iron oxide, cinnabar, ultramarine blue, cobalt blue, titanium yellow, carbon black, , etc.; organic pigments or dyes such as isoindolinone, Hansa yellow A, quinacridone, permanent red 4A, phthalocyanine blue, , etc.; metal pigments such as aluminum foil powder, brass foil powder, , etc. ; pearly luster pigments such as foil powder of titanium dioxide - coated mica, basic zinc carbonate, etc., may be used. Moreover, if needed, an inorganic filler may be added, and as the filler, for example, powder of calcium carbonate, barium sulfate, clay, talc, silica (silica dioxide), and alumina (aluminum oxide), etc., are enumerated. The additive amount of the coloring agent is usually in the range of 1 - 50 parts by weight as against 100 parts by weight of the resin material for above substrate 21.

The substrate 21 can use as a sheet the resin material mentioned above by a film forming method such as the calendar method, the inflation method, the T-die extrusion method, etc.

The thickness of formed substrate 21 is arbitrarily set based on the usage in which the decorative seat is used and the demanded performance. For instance, the one within the range of about 20 - 300 µm is applied

A treatment for improving adhesiveness such as the corona discharge treatment, the plasma treatment, the ozone treatment, etc., can be given on the surface of substrate 21 formed thus. Adhesion between the coloring layer 22 and the substrate 21 described later can be improved by adapting such a construction

### (Coloring layer)

Coloring layer 22 is an indispensable layer in the decorative seat according to the present invention, and it is composed of a solid coloring layer 22a and a design coloring layer 22b.

Solid coloring layer 22a is provided by the purpose of concealing the skin of the substrate 21, etc. , and usually formed as fully solid coloring layer without the pattern. On the other hand, the design coloring layer 22b, by figure (s), character(s), sign (s), color (s), or combination thereof, etc., has a design such as a wood grain pattern, a rift pattern, a texture pattern, a leather-like crepe pattern, a surface pattern of natural leather, a geometric configuration, an abstract pattern, etc., or color, and is formed as a layer of planate, unevenness, or convex (see, Fig. 2) on the solid coloring layer 22a . Alternatively, the design coloring layer 22b may also serve as the function of the solid coloring layer 22a, and the coloring layer 22 may consist of only a solid coloring layer 22a or a design coloring layer 22b.

Moreover, the coloring layer 22 can consist of a solid coloring layer 22a prepared all over the surface of the substrate 21, and a design coloring layer 22b partially prepared in the surface, as shown in Fig. 2. A desired pattern can be given to the decorative sheet if constituted in this way. It is also possible to constitute the coloring layer 22 from a solid coloring layer 22a and a design coloring layer 22b, so as to form the design coloring layer 22a in the substrate 21 side, and to form the solid coloring layer 22b in the transparent resin layer 24 side. In this case, although the solid coloring layer 22a may be colorlessness or may be colored by the coloring agent, the solid coloring layer 22a needs to have transparency at least so that the pattern of the design coloring layer 22b may be seen from outside.

The coloring layer 22 can be formed with a coating composition for the coloring layer 22 which comprises a binder resin as a main ingredient, a solvent and other additives. Both of aqueous coating compositions in which water and/or a water soluble organic solvent is used as the solvent, and solvent type coating compositions in which a water insoluble organic solvent is used as the solvent, may be used. In addition, it is also possible to use non-solvent type paints besides the solvent type paints as the coating composition for the coloring layer 22.

First, the aqueous coating composition will be explained. When the coloring layer 22 is formed with using the aqueous coating composition, the decorative sheet is preferably used. Because, the organic solvent does not ooze out over many hours from the decorative sheet, and the concern that the organic solvent which oozed out is emitted indoors and has a bad influence to a human body can be eliminated even when the decorative sheet is used for the interior material of buildings such as a residence.

As the binder resin for the aqueous coating composition, it is possible to use an alkaline solution soluble (meth) acrylic type copolymer which is a copolymer of one or more of monomers having a polymerizable double bond therein and one or more of unsaturated carboxylic acids having a carboxylic group therein, wherein the monomer having a double bond is, for example, (meth)acrylic type monomer such as acrylic esters, methacrylic esters, hydroxy ethyl methacrylate, etc.;nitryl type monomer such as acrylonitrile, methacrylonitrile , etc.; amide type monomer such as acryl amide, methacryl amide , etc.; N-alkoxy substituent of the amide type monomer; N-methylol substituent of the amide type monomer; styrene type monomer such as styrene, vinyl toluene, α-methyl styrene, divinyl benzene, etc.; allyl type monomer such as diallyl phthalate, allyl glycidyl ether, triallyl isocyanurate; vinyl acetate, N-vinyl pyrrolidone, or the like, and wherein the unsaturated carboxylic acid is, for example, acrylic acid, methacrylic acid, maleic acid, maleic anhydride, fumaric acid, itaconic acid, or the like.

As other binder resins for the aqueous coating composition, for example, water-soluble synthetic resins such as polyacryl amide type resins, poly (meth) acrylic type resins, polyethylene oxide type resins, poly-N-vinyl pyrrolidone type resins, water-soluble polyurethane type resins (two-component curing type polyurethane type resins), water-soluble polyester type resins, water-soluble polyamide type resins, water-soluble phenolic type resins, etc.; water-soluble natural polymers such as polynuclebtides, polypeptides, polysaccharides, etc.; or the like, are enumerated, and they are also usable.

Moreover, as the other binder resin for aqueous coating composition, for example, natural rubber, synthetic rubber, polyvinyl acetate type resin, (meth)acrylic type resin, polyvinyl chloride type resin, polyurethane type resin, and polyurethane - polyacrylic type modified or blended resin, and other resins, are usable. The above resins may be used singly or in combination of two or more species.

Moreover, as the binder resin for aqueous coating composition , urethane type resins such as acryl modified urethane resin, polyester modified urethane resin, and vinyl chloride - vinyl acetate copolymer modified urethane resin, etc.; polyol type resins, or mixed resins of vinyl chloride - vinyl acetate copolymer and acrylic type resin, etc., may be used suitably.

The above mentioned binder resin for the aqueous coating composition may be used for the aqueous coating composition, after it is given the aqueous property by dissolving, emulsifying, micro-capsulating, or other methods.

As a solvent of the aqueous coating composition, water and water-soluble organic solvents such as alcohol can be used. Usual industrial water can be used as water. Moreover, as a water-soluble organic solvent which comprises water and alcohol or the like, it can be prepared by using lower alcohol, such as methanol, ethanol, isopropyl alcohol, N-propyl alcohol, etc., glycols, or esters thereof, besides water-In addition, as for the lower alcohol, the glycol, and the ester thereof, it is desirable to contain at about 5 - 20 % by weight. Further, the solvent such as the above lower alcohols, glycols, and esters, is used for the purpose, such as fluidity improvement of ink, improvement of wettability to the substrate sheet which is to be printed, adjustment of drying, etc., and the kind, the amount used, etc., of the solvent are determined according to the purpose.

Next, the solvent type coating composition will be explained. As the binder resin for the solvent type coating composition, chlorinated polyolefin resins such as chlorinated polyethylene, chlorination polypropylene, etc.; polyester resins, polyurethane resins, acrylic resins, vinyl acetate resins, vinyl chloride - vinyl acetate copolymers, etc., are enumerated, and they can be used singly or in combination of two or more species.

As the solvent for the solvent type coating composition, although not limited especially, for example, water-insoluble organic solvent such as toluene, xylene, ethyl acetate, butyl acetate, methyl ethyl ketone, methyl isobutyl ketone, ethylene glycol monomethyl ether, and ethylene glycol monoethyl ether, or any mixed solvents thereof may be used.

The additive agents are used common to the aqueous coating composition and the solvent type coating composition. As the additive agent, coloring matters (it is also called colorant or color pigment.), such as pigments, waxes, dispersing agents, defoaming agents, leveling agents, stabilizers, fillers, molding lubricants, lubricant, etc. are enumerated.

As the color pigment, conventionally used organic or inorganic pigments can be used. As yellow pigment, organic pigments including azo type pigments such as monoazo, disazo, polyazo, etc., and isoindolinone, etc.; and inorganic pigments including chrome yellow, yellow iron oxide, cadmium yellow, titanium yellow, and antimony yellow, etc.; can be used. As red pigment, organic pigments including azo type pigments such as monoazo, disazo, polyazo, etc., and quinacridon, etc., and inorganic pigments including red iron oxide, cinnabar, cadmium red, chrome vermilion, etc., can be used. As blue pigment, organic pigments such as phthalocyanine blue, indanthrene blue, etc., and inorganic pigment such as iron blue, ultramarine blue, cobalt blue, etc., can be used. As black pigment, organic pigments such as aniline black, etc., and inorganic pigment such as carbon black, etc., canbeused. As white pigment, inorganic pigments such as titanium dioxide, zinc white, antimony trioxide, etc., can be used.

. When the solvent is used, the coating composition for the coloring layer 22 is prepared by adding the resin composition (binder resin), and other additives, if necessary, to the solvent, and dissolving , dispersing, and mixing them in accordance with known procedures.

Coloring layer 22 can be formed by applying the coating composition for the coloring layer 22 by coating or printing method, and then dying and hardening the applied coating composition. The solid coloring layer 22a is usually formed by coating or printing, and the pattern coloring layer 22b is usually formed by printing. Various known methods, for example, the roll coating, the curtain flow coating, the wire bar coating, the reverse coating, the photogravure coating, the photogravure reverse coating, the air knife coating, the kiss coating, the blade coating, the smooth coating, the comma coating, the spray coating, the pour and flow coating, the brush coating, etc., can be used, when the coating composition for the coloring layer 22 is applied, and it is usually applied so as to obtain a layer of about 1.0 - 10. 0 µm in film thickness after drying. Alternatively, when printing the coating composition for the coloring layer 22, various known methods including the relief printingmethods such as gravure printing, letterpress printing, flexographic printing, etc.; the planographic printing method such as planographic offset, direct lithography, etc.; the screen printing method such as silk screen, etc.; the electrostatic printing method; the ink jet printing; and the transfer printing method using a transfer sheet, and so on; maybe used, and the hand drawing method is also adaptable. It is usually applied so as to obtain a layer of about 1.0 - 10.0 µm in film thickness after drying. In addition, the design coloring layer 22b may print and form on a face of the material which comprises the transparent resin layer 24 mentioned later, wherein the face is encountered to the substrate 21.

Alternatively, the coloring layer 22 may be formed with a metallic thin film. By using a metal such as aluminum, chrome, gold, silver, copper, or the like, and utilizing an appropriate method such as vacuum deposition, sputtering , etc., the metallic thin film can be formed. Any combination thereof is also possible. The metallic thin film may be formed on the entire surface of the substrate 21, or may be formed partially on the surface as a certain pattern.

### (Adhesive layer)

Adhesive layer 23 is a layer indispensable on the decorative sheet according to the present invention. The adhesive layer is prepared between the coloring layer 22 and the transparent resin layer 24, as shown in Fig. 2. It has a role of a primer layer or anchor layer which enhances the adhesion nature between the substrate 21 in which the coloring layer 22 was formed and the transparent resin layer 24, and also has an action which improves the durability and the appearance maintenance property over a long period of time. Such actions can keep the formed pattern for a long period of time, and is very effective.

The adhesive layer 23 is formed by a coating composition for the adhesive layer 23 which comprises a resin composition, a solvent, and other additive agents. As the solvent, although it is not limited particularly, but for example, water-insoluble organic solvents such as toluene, xylene, ethyl acetate, butyl acetate, methyl ethyl ketone, methyl isobutyl ketone, ethylene glycol monomethyl ether, ethylene glycol monoethyl ether, etc.; water; and water soluble organic solvents such as methanol, ethanol, isopropyl alcohol, n-propyl alcohol, etc. ; or any mixtures thereof, can be used. In addition, it is also possible to use non-solvent type coating composition which does not use any solvent as the coating composition for the adhesive layer 23. The non-solvent type coating composition is the one which is prepared in consideration of the environmental problem, and is used preferably.

As the resin composition, rubber type resin, acrylic type resin, epoxy type resin, urethane type resin, etc. are enumerated. Among them, urethane type resin is used preferably. By using urethane type resin, more powerful adhesion strength can be obtained and the decorative sheet excellent in flexibility can be provided.

The urethane type resin is a polyurethane of which main ingredient is polyol (polyhydric alcohol) and cross linking agent (curing agent) is isocyanate.

The polyol has two or more hydroxyl groups in a molecule. As the polyol, for example, polyethylene glycols, polypropylene glycols, butylene glycol, neopentyl glycol, 1,6-hexanediol, acrylic polyols, polyester polyols, polyether polyols, etc., may be used.

As for the isocyanate, the ones which are usually used to manufacture the polyurethane are also used in this invention. As the isocyanate, for example, aliphatic polyisocyanates, such as trimethylene diisocyanate, tetramethylene diisocyanate, hexamethylene diisocyanate, pentamethylene diisocyanate, lysine ester triisocyanate, 1,4,8-triisocyanate octane, 1,3,6-triisocyanate hexane, 2,5,7-trymethyl- 1,8-diisocyanate methyl octane, etc.; alicyclic polyisocyanates such as 1,3-cyclopentene diisocyanate, 1,4-cyclohexane diisocyanate, 1,3-cyclohexane diisocyanate, 3-isocyanate methyl - 3,5,5 - trymethyl cyclohexyl isocyanate (trivial name: isophorone diisocyanate), 1,3,5 - triisocyanate cyclohexane, 1,3,5 - trimethyl isocyanate cyclohexane, 2-(3-isocyanate propyl) -2,5 - di (isocyanate methyl)-bicyclo (2, 2, 1) heptane, etc.; aromatic aliphatic polyisocyanate such as 1,3- or 1,4-xylylene diisocyanate or mixture thereof, 1,3- or 1,4-bis(1-isocyanate - 1-metyl ethyl) benzene, 1,3,5-triisocyanate metyl benzene, etc.; aromatic polyisocyanate such as m-phenylene diisocyanate, p-phenylene diisocyante, triphenyl methane - 4,4',4" - triisocyanate, 4,4'-diphenyl methane - 2,2',5,5' - tetraisocyanate, etc.; and derivatives of these polyisocyanates, may be used. These polyisocyanate may be used in combination of two or more species. Among the above polyisocyanates, aliphatic polyisocyanates, alicyclic polyisocyanates, and aromatic aliphatic polyisocyanates, as well as the polyisocyanate derivatives thereof are used preferably. Such polyisocyanates are excellent in safety, hygiene, and weather resistance.

When the solvent is used, the coating composition for the adhesive layer 23 (adhesive agent) is prepared by adding a resin composition, and other additives, if necessary, to the solvent, and then dissolving, dispersing, and mixing them in accordance with known procedures.

Adhesive layer 23 can be formed by applying the above mentioned coating composition for the adhesive layer 23 (adhesive agent) onto the coloring layer 22, and then dying and hardening the applied coating composition. Various known methods, for example, the roll coating, the photogravure coating, the air knife coating, the comma coating, can be used as the coating method. In view of the productivity, the photogravure coating method and the comma coating method are used preferably.

The adhesive layer is coated so as to obtain a coated amount after drying of about 0.1 - 20 g/m², preferably, about 1 - 10 g/m².

### (Transparent resin layer)

Transparent resin layer 24 is an indispensable layer to the decorative seat according to the present invention. Transparent resin layer 24 is layered on the coloring layer 22 through the bonding layer 23, in order to protect the coloring layer 22 from the abrasion or so, to improve the surface strength of the decorative seat, and to provide a painting impression.

As a resin for constituting the transparent resin layer, although there is not a particular limitation as far as it is a transparent resin capable of being formed on the above mentioned coloring layer 22 through the adhesive line 23 with a sufficient adhesion, but, for example, polyester resins can be enumerated preferably. With respect the polyester resins, the organic gas which occurs when carrying out incineration waste disposal of the decorative sheet after production is one of high safety, and thus it is preferably used in view of the environment. Here, the polyester resin is the copolymer which is obtained by esterification between aromatic dicarboxylic acid(s) as acid ingredient, such as terephthalic acid, isophthalic acid, naphthalene dicarboxylic acid, etc., and aliphatic diol(s) as alcohol ingredient, such as ethylene glycol, diethylene glycol, butanediol, hexanediol, etc. As concrete resins usable in the present invention, for example, polyethylene terephthalate, polybutylene terephthalate, and ethylene - terephthalate - isophthalate terpolymer, etc., can be enumerated. Moreover, as resins other than the polyester resin which can be used as the resin for the transparent resin layer 24, the same resin material as above mentioned for the substrate 21 can be enumerated. Any known additive agents, such as coloring agent, filler, ultraviolet absorption agent, photostabilizer, matting agent, antioxidant, antiblocking agent, etc., may be added, if necessary, to such a resin which forms the transparent resin layer 24.

On the adhesive layer 23, the transparent resin layer 24 may be formed by laminating a colorless or colored transparent resin film which was prepared separately, in accordance with any one of various kinds of laminating methods such as dry lamination, thermal lamination, or the like. Alternatively, the transparent resin layer 24 may be formed by extrusion coating of the resin, or by any other known method. Among them, the method wherein the resin is formed as a film in advance, and then the film is dry laminated is preferable.

In order to improve the stability in size, strength, and crystallinity, the film may be orientated on the preparation of the film, and in order to improve the adhesiveness, the film may be subjected to primer coating, corona discharge treatment, etc.

The thickness of transparent resin layer 24 is usually about 10 - 500 µm, and about 30 - 300 µm is more desirable.

On the surface of the transparent resin layer 24, embossing may be applied. By giving emboss pattern, the design nature of the decorative sheet can be improved. The pattern by such emboss is not limited especially, and to be a pattern corresponding to the usage of the decorative seat. For instance, wood grain trachea ditch, wood grain annual ring irregularity, relief annual ring irregularity, bark irregularity, gray, satin finishing, hair lines, myriad lines, stone surface ruggedness such as cleavage plane of granite, surface texture of cloth, leather-like crepe pattern, characters, geometric configuration, etc., are enumerated. On the other hand, when a high reflection is desired, the smoothness of the surface may be enhanced by applying pressure with a specular roll.

Harmful gas, such as dioxin, is not generated on the disposal and incineration of the decorative sheet, when both this transparent resin layer 24 and the above mentioned substrate 21 are formed by polyolefin type resin, in contrast to the case that the decorative sheet is formed with vinyl chloride resin. Therefore, the decorative sheet which used polyolefin type resin for the substrate 21 and the transparent resin layer 24 has an advantage of reducing the environmental burden, and is used preferably.

With respect to the transparency of the transparent resin layer, in the present invention, it is not severely defined, and is sufficient as far as substantially transparent, and it may involve a little cloudiness and opaqueness.

### (Interference prevention layer)

Interference prevention layer 25 is an indispensable layer to the decorative seat according to the present invention, and is the layer that characterizes this invention. Interference prevention layer 25 is a layer to prevent the occurrence of the rainbow - colored interference fringes caused by irradiation with lights such as fluorescent lamp even if the mirror surface finish is applied to the decorative sheet or the coloring layer 22 of primary color is adapted. Simultaneously, it is the layer to protect the coloring layer 22 from scratching, etc., as with the function of the transparent resin layer 24 which is arranged under the interference prevention layer, as well as, to bring the abrasion resistance, the contamination resistance, and further the chemical resistance, etc., to the decorative sheet.

The interference prevention layer 25 is formed with a coating composition for the interference prevention layer 25 which comprises an electron beam curing type resin as a main ingredient, a solvent and other additive agents. As the solvent, it is not limited particularly, and the same solvents as above described for the coating composition for the adhesive layer 23 may be used. In addition, it is also possible to use a non-solvent type coating composition which does not use any solvent as the coating composition for the interference prevention layer 25. The non-solvent type coating composition is the one which is prepared in consideration of the environmental problem, and is used preferably.

As the electron beam curing type resin, resins which are obtained by giving rise to a cross-linking reaction of at least one species selected from the group consisting of urethane acrylates, epoxy acrylates, acryl polyols, and polyester acrylates, with a curing agent, and resins which are obtained by cross-linking and hardening the electron beam curing type resin mentioned later by itself or in combination with the curing agent, are enumerated. In the coating composition for the interference prevention layer 25, at least one cross-linkable resin selected from these resin may be used. Among these resins, the resins which are obtained by giving rise to a cross-linking reaction of at least one species selected from the group consisting of urethane acrylates, epoxy acrylates, acryl polyols, and polyester acrylates, with a curing agent are used preferably.

As the curing agent for preparing the cross-linkable resin, usually, an isocyanate or an organic sulfonic acid salt is used for the unsaturated polyester type resin or polyurethane type resin, and an amine is used for the epoxy type resin, and further, as a radical polymerization initiator, methyl ethyl ketone peroxide, azobisisobutylonitrile, or the like is used.

As the isocyanate, bivalent or more valent aliphatic or aromatic isocyanates maybe used. Concretely, for example, tolylene diisocyanate, xylene diisocyanate, 4,4-diphenyl methane diisocyanate, hexamethylene diisocyanate, lysine diisocyanate, etc., are enumerated

Moreover, as the electron beam curing type resin, a composition in which prepolymer, oligomer, and/or monomer are appropriately mixedmay be used, wherein each of prepolymer, oligomer, and/or monomer is a source for the polymer capable of being hardened by ionized radiation of the electron beam which bears energy quantum capable of giving rise to molecular polymerization or cross linking, among electromagnetic waves or charged particle beams, and wherein each of prepolymer, oligomer, and/or monomer has polymerizable unsaturated bonds or epoxy group (s). As these compositions, acrylates such as urethane acrylates, polyester acrylates, epoxy acrylates, silicon resins such as siloxane, polyester resins, unsaturated polyester resins, epoxy resins, phenolic resin, polyurethane resins are enumerated. Among these, acrylate type electron beam curing type resin is preferably used, and it can bring a high degree cross linked nature, an outstanding wear resistance, and an outstanding contamination resistance to the interference prevention layer 25.

As examples of the prepolymer and oligomer, unsaturated polyesters such as condensates of unsaturated dicarboxylic acids and polyhydric alcohols; methacrylates such as polyester methacrylates, polyether methacrylates, polyol methacrylates, melamine methacrylates; acrylates such as polyester acrylates, epoxy acrylates, urethane acrylates, polyether acrylates, polyol acrylates, melamine acrylates; etc., are enumerated.

When using epoxy resin, or prepolymer or oligomer of epoxy type or urethane type, it is possible to use it as a two liquid type mixture so as to mix with a curing agent to be used for respective curing, such as amine or isocyanate.

As examples of the monomer, styrene type monomers such as styrene, α-styrene, etc.; acrylic esters such as methyl acrylate, 2-ethylhexyl acrylate, methoxy ethyl acrylate, butoxy ethyl acrylate, butyl acrylate, methoxy butyl acrylate, phenyl acrylate, etc.; methacrylic esters such as methyl methacrylate, ethyl methacrylate, propyl methacrylate, methoxy ethyl methacrylate, ethoxy methyl methacrylate, phenyl methacrylate, lauryl methacrylate, etc.; unsaturated acid substituted amino acrylic esters such as 2- (N, N-diethyl amino) ethyl acrylate, 2-(N,N-dimethyl amino) ethyl methacrylate, 2-(N,N-dibenzyl amino) ethyl acrylate, 2-(N,N-dimethyl amino) methyl methacrylate, 2- (N,N-diethyl amino) propyl acrylate, etc.; unsaturated carboxylic acid amides such as acryl amide, methacryl amide, etc.; compounds such as ethylene glycol diacrylate, propylene glycol diacrylate, neopentyl glycol diacrylate, 1,6-hexane diol diacrylate, diethylene glycol diacrylate, tryethylene glycol diacrylate, etc.; polyfunctional compounds such as dipropylene glycol diacrylate, ethylene glycol acrylate, propylene glycol dimethacrylate, diethylene glycol dimethacrylate, etc.; and/or polythiol compounds having two or more thiol groups in a molecule, for example, trimethylol propane trithioglycolate, trimethylol propane trithiopropylate, pentaerythritol tetrathioglycol, etc., are enumerated.

Accepting necessity, the above compound is used singly or in combination of two or more species. In order to give the usual coating aptitude to a resin composition, it is desirable to blend at a rate of not less than 5% by weight of prepolymer or oligomer and not more than 95% by weight of monomer and/or polythiol, based on 100 % by weight of resin composition.

On the selection of monomer, when flexibility is required to the hardened article, the quantity of monomer is lessened, or monofunctional or bifunctional acrylate type monomer is used within the range of not causing the adverse effect on the coating aptitude, in order to construct a structure having a comparatively lessened cross-linking density. On the other hand, when the heat resistance, hardness, solvent resistance, etc., of the hardened article are required, it is desirable to make the quantity of a monomer high, or trifunctional or more functional acrylate type monomer is used within the range of not causing the adverse effect on the coating aptitude, in order to construct a structure having a heightened cross-linking density. It is also possible to use mono- or bi- functional monomer in combination and mixing with tri- or more functional monomer to regulate the relation between the coating aptitude and the physical properties of the obtained hardened article. As the above mentioned monofunctional acrylate type monomer, for example, 2-hydroxy acrylate, 2-hexyl acrylate, phenoxy ethyl acrylate, etc., are enumerated. As the above mentioned bifunctional acrylate type monomer, for example, ethylene glycol diacrylate, 1,6-hexane diol acrylate, etc.; and as the tri- or more functional acrylate type monomer, for example, trymethylol propane triacrylate, pentaerythritol tetraacrylate, dipentaerythritol hexaacrylate, etc., are enumerated, respectively.

When the electron beam curing type resin obtained as above is used for the cross linking resin, it is desirable to have the functional group that reacts with the curing agent , and OH group, SH group, amino group, carboxyl group, epoxy group, etc., as a functional group. Even when it does not possess these functional groups, however, it can be used for the cross linking resin as far as it possesses porimerizable unsaturated double bonds, because it can be hardened by polymerization. Namely, the cross linking resin involves the resins capable of cross linking with the curing agent, and the resin capable of being hardened by polymerization without using the curing agent. For example, when using, for example, urethane acrylate, epoxy acrylate, acryl polyol, or the like, the curing is proceeded by causing the cross linking reaction of OH group or epoxy group with the curing agent, and the double bonds in the acrylic group cause the radical polymerization so as to harden, respectively. Therefore, as for the cross linking resin after curing, in some cases, the product from the cross linking reaction and the product from the polymerization, which are separately produced mutually, are present, and in other cases, the structure produced by the cross linking and the structure produced by the polymerization may coexist in a same molecule. Furthermore, when the product from the cross linking reaction and the product from the polymerization have each polymerizable double bonds, the polymerization reaction may be caused between both products so as to produce a single molecule.

In order to form the interference prevention layer 25, it is possible to prepare a mixture by mixing the resin, the prepolymer, or the oligomer, each of which has functional group (s) or/and polymerizable double bonds and is also used for the above mentioned cross linking resin, with the curing agent or a polymerization catalyst, etc., and then to coat the mixture. Moreover, it is also possible to coat the mixture, after the hardening of this mixture progressed in a certain extent and reached to a proper viscosity for coating.

As mentioned above, although the electron beam curing type resin which forms the interference prevention layer 25 are explained, in the decorative sheet according to the present invention, a silicone (meth)acrylate and silica particles are included in the above electron beam curing type resin.

In order to give the contamination resistance to the interference prevention layer 25 concerned, it may be considered that silicone oil or fluorocarbon resin are blended into the above mentioned electron beam hardening type resin, and then they are cross linked by using the above mentioned isocyanate type curing agent. With respect to such type, however, the contamination resistance may be at inadequate level, or the durability of this property may be low, in some cases. In another approach, it is also possible to give the contamination resistance to the interference prevention layer 25 by adding a silicone (meth)acrylate alone to the above mentioned electron beam curing type resin. In this case, however, it will arise that when the surface of the interference prevention layer 25 is touched by bare hand, the fingerprint marks remain onto the layer and the fingerprint marks are hardly wiped off, and it is a problem.

Under such a situation, by adding both a silicone (meth)acrylate and silica particles in the electron beam curing type resin as mentioned above, it is possible to maintain the surface to be hard to attach the fingerprint marks (that is, the contamination resistance can be improved). Even when the fingerprint marks remains on the surface, it is possible to make the surface easy to wipe off the fingerprint mark, while being able to prevent the generation of the interference fringes effectively.

With respect to the containing ratios of the silicone (meth)acrylate and silica particles to the electron beam curing type resin, although they are not particularly limited in the present invention, for example, it is desirable that the silicone (meth)acrylate is to be in the range of 0.3 - 10 parts by weight, and silica particles are to be in the range of 1 - 20 parts by weight, based on 100 parts by weight of the electron beam curing type resin. It is because it will be not able to expect the effect (contamination resistance) when the silicone (meth)acrylate is less than 0.3 part by weight, while it will become difficult to wipe off the fingerprint marks once the fingerprint marks are adhered when the silicone (meth) acrylate is more than 10 parts by weight. Moreover, it is because it will be not able to expect the effect (easy - to - wipe off the fingerprint marks) when the silica particles are less than 1 part by weight, while the total gloss of the interference prevention layer 25 may be degraded and thus the design nature of the decorative sheet may be spoiled when the silica particles are more than 20 parts by weight.

With respect to the silica particles used in the present invention, colloidal silica particles are used having 10 - 50 nm in diameter, more preferably, 10 - 30 nm in diameter. When the diameter is more than 100 nm, there is fear that the transparency of interference prevention layer 25 decreases. Moreover, the diameters of the silica particulates to be used do not need to be a single size, and it is possible to mix and use the silica particulates of different diameters. In this case, the silica particulates which have a relatively large diameter would contribute to the light scattering.

Colloidal silica is used as a silica particle. Even if it is a case where the amount of addition increases, since the colloidal silica can hardly affect the transparency and does not spoil the fluidity, there is little influence on printing.

The interference prevention layer 25 is formed by applying the coating composition for the interference prevention layer 25 onto the transparent resin layer 24, then irradiating it with an electron beam in order to make the resin cross-link and harden. As the method of coating, the same methods as described above for the formation of the coloring layer 4 in all solid state, such as roll coating method, photogravure coating method, etc., may be adaptable.

Although the thickness of the interference prevention layer 25 is not particularly limited, to be not less than 3 µm at dried condition, more preferably, to be not less than 6 µm at dried condition, is desirable. The interference induced stripe can be effectively prevented when the thickness of the interference prevention layer 25 is to be not less than 6 µm. Incidentally, the upper limit of the thickness of the interference prevention layer 25 is not particularly concerned in the present invention, and it may be set properly as circumstances demand. In the usual case, however, it may be set to be not more than 20 µm. When it thickens more, it may bring an adverse effect in cost, and also an adverse influence to the flexibility, etc.

As electron beam source, various electron beam accelerators, such as Cockcroft - Walton accelerators, van de Graaff accelerators, resonance transformers, insulated core transformers, linear types, dynamitron types, and high - frequency electron accelerators, etc., may be used, and electrons having an energy of 100 to 1000 KeV, preferably 100 to 300 KeV, will be applied, for example. As exposure dose of the electron beam, it is usually about 0.5 - 30 Mrad.

As mentioned above, the constitution of the decorative sheet 20 according to the present invention was explained. However, the present invention is not limited thereto. For example, the decorative sheet may have a conductive layer for giving conductivity to the decorative sheet, a primer layer for improving the mutual adhesion between the layers, or the like, arbitrarily as occasion demand.

Then, the decorative board according to the present invention can be formed by attaching such a decorative sheet onto the surface of a base material as adherend through an adhesive.

The base material as adherend is not particularly limited. Examples of material of the base material include inorganic nonmetallic, metallic, wood - based, and plastic - based. More concretely, inorganic nonmetallic base boards include those formed of inorganic materials, for example, non-clay ceramic type materials, such as sheet - forming cement, extrusion cement, slag cement, ALC (lightweight cellular concrete), GRC (glass fiber - reinforced concrete), pulp cement, wood chip cement, asbestos cement, calcium silicate, gypsum, gypsum slag, etc.; and ceramics, such as earthenware, pottery, porcelain, stoneware, glass, enamel, etc. Metallic substrates include those formed of metal materials, for example, iron, aluminum, copper, etc. Wood - based substrates include, for example, veneer, plywood, particle board, fiber sheet or plate, and laminated wood of cedar, cypress, oak, lauan, teak, or the like. Plastic substrates include those formed of, for example, resin materials, such as polypropylene, ABS resin, phenolic resin, etc. The base material as adherend may have any shape, for example, may be in the form of a flat plate, a curved plate, a polygonal column, etc.

In the above embodiment, the layer constitution of "substrate / coloring layer / adhesive layer / transparent resin layer / interference prevention layer" , as shown in Fig. 2, is described. The present invention, however, is not limited thereto, and it is also possible to take other layer constitution, such as "substrate / adhesive layer / coloring layer / transparent resin layer / interference prevention layer". In this case, the interference prevention layer comes to be provided on a surface of the transparent resin layer, the surface being in opposite side to another surface being in contact with the coloring layer.

### Example

The present invention will be describedmore concretely with referring to Examples and Controls as follows.

### (Example 1) (does not fall within the scope of the present invention)

As a substrate, a polyolefin type resin sheet with a thickness of 80 µm which consists of polypropylene type resin colored with titanium oxide was used. Onto the substrate, an ink of which main ingredient was urethane type resin and which contained titanium oxide as a coloring pigment was applied by photogravure printing in order to form a solid coloring layer having a coating amount after dried of 2 g/m², and then another ink of which main ingredient is urethane type resin and which contained a generic organic pigment (phthalocyanine blue, etc.) was further applied by photogravure printing in order to form a design coloring layer of wood grain pattern having a coating amount after dried of 2 g/m².

Next, two-component curing type polyester polyol type adhesive being in heated to 75 °C was applied by roll coating method in order to form an adhesive layer of 5 g/m²

Then, PET film mainly composed of polyester resin was laminated on the above mentioned adhesive layer in order to form a transparent resin layer. Thereafter, the product was left standing for three days at 40 °C in order to cure the above mentioned coating composition B for the adhesive layer.

Next, the electron beam curing type resin mainly composed of electron beam curing type acrylate resin and polyfunctional monomer was applied on the transparent resin layer by photogravure printing in order to form a layer having a thickness after dried of 3 µm, and then the coated film was irradiated with electron beam under the condition of 175 keV, and 30 kGy (3 Mrad) so as to cure the coated film by cross - linking in order to form an interference prevention layer. The decorative seat of Example 1 as shown in Fig. 2 was thus obtained.

### (Example 2) (does not fall within the scope of the present invention)

The same decorative sheet as the case of Example 1 was produced except the thickness of the interference prevention layer in the decorative sheet of Example 1 was changed to 6 µm (decorative sheet of Example 2).

### (Example 3) (does not fall within the scope of the present invention)

The same decorative sheet as the case of Example 1 was produced except the thickness of the interference prevention layer in the decorative sheet of Example 1 was changed to 9 µm (decorative sheet of Example 3).

### (Example 4) (does not fall within the scope of the present invention)

The same decorative sheet as the case of Example 3 was produced except silicone acrylate was added, at a ratio of 2 parts by weight, to the electron beam curing type resin used in the decorative sheet of Example 3 (decorative sheet of Example 4).

### (Example 5) (does not fall within the scope of the present invention)

The same decorative sheet as the case of Example 3 was produced except colloidal silica (manufactured by Nissan Chemical Industries, Ltd.; trade name: MEK-ST; particle diameter: 10 - 20 nm) as the silica particles was added, at a ratio of 2 parts by weight, to the electron beam curing type resin used in the decorative sheet of Example 3 (decorative sheet of Example 5).

### (Example 6)

The same decorative sheet as the case of Example 1 was produced except silicone acrylate and colloidal silica (manufactured by Nissan Chemical Industries, Ltd.; trade name: MEK-ST; particle diameter: 10 - 20 nm) as the silica particles were added, at ratios of 2 parts by weight and 5 parts by weight, respectively, to the electron beam curing type resin used in the decorative sheet of Example 1 (decorative sheet of Example 6).

### (Example 7)

The same decorative sheet as the case of Example 2 was produced except silicone acrylate and colloidal silica (manufactured by Nissan Chemical Industries, Ltd.; trade name: MEK-ST; particle diameter: 10 - 20 nm) as the silica particles were added, at ratios of 2 parts by weight and 5 parts by weight, respectively, to the electron beam curing type resin used in the decorative sheet of Example 2 (decorative sheet of Example 7).

### (Example 8)

The same decorative sheet as the case of Example 3 was produced except silicone acrylate and colloidal silica (manufactured by Nissan Chemical Industries, Ltd.; trade name: MEK-ST; particle diameter: 10 - 20 nm) as the silica particles were added, at ratios of 2 parts by weight and 5 parts by weight, respectively, to the electron beam curing type resin used in the decorative sheet of Example 3 (decorative sheet of Example 8).

### (Control 1)

With respect to the substrate, the coloring layers, the adhesive layer, and the transparent resin layer were prepared in accordance with the same procedures as the case of Example 1. Then, ultraviolet curing type resin of which main ingredient was ultraviolet curing type acrylate resin and which contained a photo initiator was applied onto the transparent resin layer by photogravure printing in order to form a layer having a thickness after dried of 3 µm, and then the coated film was irradiated with ultraviolet ray under the condition of 80 W for 2 seconds so as to cure the coated film by cross - linking in order to form a ultraviolet curing type resin layer. The decorative seat of Control 1 as shown in Fig. 1 was thus obtained.

### (Control 2)

The same decorative sheet as the case of Control 1 was produced except the thickness of the ultraviolet curing type resin layer in the decorative sheet of Control 1 was changed to 6 µm (decorative sheet of Control 2).

### (Control 3)

The same decorative sheet as the case of Control 1 was produced except the thickness of the ultraviolet curing type resin layer in the decorative sheet of Control 1 was changed to 9 µm (decorative sheet of Control 3).

The same decorative sheet as the case of Control 3 was produced except silicone acrylate and colloidal silica (manufactured by Nissan Chemical Industries, Ltd.; trade name: MEK-ST; particle diameter: 10 - 20 nm) as the silica particles were added, at ratios of 2 parts by weight and 5 parts by weight, respectively, to the ultraviolet curing type resin layer in the decorative sheet of Control 3(decorative sheet of Control 4).

### (Evaluation of decorative seat)

About the produced decorative sheets of Examples 1 - 8 and Control 1 - 4, evaluations of the existence of interference fringes, the crack resistance, the contamination resistance, and the characteristics for fingerprint wiping was performed. The evaluation results are shown in Table 1.

The evaluation about the existence of interference fringes performed by visually checking whether rainbow colored interference fringes would arise on the surface using the fluorescent light (National Palook (trademark), three band type natural white). In the Table, the mark ⊚ means that the interference fringes are hardly observed, the mark ○ means that interference fringes are slightly observed, and the mark Δ means that interference fringes are a little conspicuous, and the mark X means that interference fringes are notably overbed.

The evaluation about the crack resistance performed by visually checking whether a crack would arise when a decorative sheet was twisted around metal sticks with which diameters differed mutually. The numerical value of Table 1 shows the minimum diameter of the metal stick when a crack did not occur (that is, for instance when this numerical value is 3, it means that a crack was not produced when the decorative sheet was twisted around a metal stick of 3mm in diameter, but the crack arose when it was twisted around a metal stick of 2mm in diameter).

The evaluation about the contamination resistance was performed by drawing the predetermined pattern with a Magic Marker on the surface of the decorative sheet temporarily, and then wiping the pattern off using the commercially available gauze after the drawn pattern was dried. In Table 1, the mark ○ means that the drawn pattern was able to be wiped off easily, the mark Δ means that the drawn pattern was able to be wiped off somehow, and the mark X means that the drawn pattern was not able to be wiped off.

The evaluation about the characteristics for fingerprint wiping was performed by leaving fingerprints onto the surface of the decorative sheet temporarily, and then wiping the fingerprints off using the commercially available gauze. The numerical value in Table 1 is the number of times of reciprocations of the gauze which was necessitated for wiping the fingerprints off completely.

**( Table 1)**

| | Additive | | Evaluation | | | |
|---|---|---|---|---|---|---|
| | Silicone acrylate | Silica particles | Interference fringes | Crack resistance | Contamination resistance | wiping of Fingerprint |
| Example 1* (Thickness of electron beam curing type resin: 3 µm) | - | - | ○ | 2 or less | × | 30 |
| Example 2* (Thickness of electron beam curing type resin: 6 µm) | - | - | ⊚ | 2 or less | × | 30 |
| Example 3* (Thickness of electron beam curing type resin: 9 µm) | - | - | ⊚ | 2 or less | × | 30 |
| Example 4* (Thickness of electron beam curing type resin: 9 µm) | 2 wt. parts | - | ⊚ | 2 or less | ○ | 50 |
| Example 5* (Thickness of electron beam curing type resin: 9 µm) | - | 2 wt. parts | ⊚ | 2 or less | × | 5 |
| Example 6 (Thickness of electron beam curing type resin: 3 µm) | 2 wt. parts | 2 wt. parts | ⊚ | 2 or less | ○ | 5 |
| Example 7 (Thickness of electron beam curing type resin: 6 µm) | 2 wt. parts | 2 wt. parts | ⊚ | 2 or less | ○ | 5 |
| Example 8 (Thickness of electron beam curing type resin: 9 µm) | 2 wt. parts | 2 wt. parts | ⊚ | 2 or less | ○ | 5 |
| Control 1 (Thickness of UV curing type resin: 3 µm) | - | - | × | 2 or less | × | 30 |
| Control 2 (Thickness of UV curing type resin: 6 µm) | - | - | Δ | 4 or less | × | 30 |
| Control 3 (Thickness of UV curing type resin: 9 µm) | - | - | ○ | 6 or less | × | 30 |
| Control 4 (Thickness of UV curing type resin: 9 µm) | 2 wt. parts | 2 wt. parts | ○ | 6 or less | Δ | 10 |

| | | | | | | |
|---|---|---|---|---|---|---|
| *does not fall within the scope of the present invention | | | | | | |

As it is clear from Table 1, particularly, it is clear when compared Examples 1 -3 with Controls 1 -3, it was found that the decorative sheet of Examples 1-3, regardless of the thickness of the interference prevention layer formed on the surface thereof, can prevent the occurrence of the interference fringes effectively, and also prevent the creation of crack, as compared with the conventional decorative sheet which was provided with the ultraviolet ray curing type resin layer. Moreover, as it is clear when compared Examples 4 - 5 with Controls 1 -3, it was found that the contamination resistance can be given to the decorative sheet of Examples 4-5 by adding silicone acrylate to the electron beam curing type resin which formed the interference prevention layer of the present invention, and that the characteristics of fingerprint wiping off can be given to the decorative sheet of the present invention by adding silica particles to the electron beam curing type resin which formed the interference prevention layer. Furthermore, as it is clear when compared Examples 6 - 8 with Control 4, it is found that even if the silicone acrylate and the silica particles were added to the conventional ultraviolet ray curing type resin layer, the conventional decorative sheet was inferior to the decorative sheet according to the present invention.

## Claims

1. Decorative sheet which comprises a substrate, a coloring layer, an adhesive layer, and a transparent resin layer, which is **characterized in that** an interference prevention layer formed from a coating composition comprising an electron beam curing type resin as a main ingredient, silicone (meth)acrylate, and colloidal silica particles having a diameter of 10 - 50 nm, is provided on a surface of the transparent resin layer, the surface being in opposite side to another surface being in contact with the coloring layer or the adhesive layer.

2. Decorative sheet according to claim 1, wherein the silicone (meth)acrylate and the silica particles are included at ratios of 0.3 - 10 parts by weight and 1 - 20 parts by weight, respectively, based on 100 parts by weight of the electron beam curing type resin.

3. Decorative sheet according to claim 1 or 2, wherein the coating composition further comprises a solvent.

4. Decorative sheet according to any one of claims 1 to 3, wherein the transparent resin layer comprises a polyester resin.

5. Decorative board, which is **characterized in that** the decorative sheet according to one of claims 1 - 4 is adhered to a base board as adhered through an adhesive agent.

## Patentansprüche

1. Dekorationsfolie, die ein Substrat, eine Farbschicht, eine Klebeschicht und eine transparente Harzschicht umfasst, die **dadurch gekennzeichnet ist, dass** eine Interferenzverhinderungsschicht, die durch eine Beschichtungszusammensetzung ausgebildet wurde, die ein Harz eines durch Elektronenstrahlen härtbaren Typs als Hauptbestandteil, Silicon(meth)acrylat und kolloidale Siliciumdioxidteilchen mit einem Durchmesser von 10 - 50 nm umfasst, auf einer Oberfläche der transparenten Harzschicht angebracht ist, wobei sich die Oberfläche auf der zu der anderen Oberfläche, die in Kontakt mit der Farbschicht oder der Klebeschicht steht, entgegengesetzten Seite befindet.

2. Dekorationsfolie nach Anspruch 1, wobei das Silicon(meth)acrylat und die Siliciumdioxidteilchen in Anteilen von 0,3 - 10 Gewichtsteilen bzw. 1 - 20 Gewichtsteilen, bezogen auf 100 Gewichtsteile des Harzes eines durch Elektronenstrahlen härtbaren Typs, enthalten sind.

3. Dekorationsfolie nach Anspruch 1 oder 2, wobei die Beschichtungszusammensetzung ferner ein Lösemittel umfasst.

4. Dekorationsfolie nach einem der Ansprüche 1 bis 3, wobei die transparente Harzschicht ein Polyesterharz umfasst.

5. Dekorationsplatte, die **dadurch gekennzeichnet ist, dass** die Dekorationsfolie nach einem der Ansprüche 1 bis 4 mit einer Grundplatte - über ein Klebemittel - verklebt ist.

## Revendications

1. Feuille décorative qui comprend un substrat, une couche colorante, une couche adhésive et une couche de résine transparente, qui est **caractérisée en ce qu'**une couche empêchant une interférence, formée à partir d'une composition de revêtement comprenant une résine du type durcissant sous l'effet d'un faisceau d'électrons en tant qu'ingrédient principal, du (méth)acrylate de silicone, et des particules de silice colloïdale ayant un diamètre de 10 à 50 nm, est disposée sur une surface de la couche de résine transparente, la surface étant du côté opposé par rapport à une autre surface qui est en contact avec la couche colorante ou la couche adhésive.

2. Feuille décorative selon la revendication 1, dans laquelle le (méth)acrylate de silicone et les particules de silice sont inclus dans des proportions de 0,3 à 10 parties en poids et de 1 à 20 parties en poids, respectivement, pour 100 parties en poids de la résine de type durcissant sous l'effet d'un faisceau d'électrons.

3. Feuille décorative selon la revendication 1 ou 2, dans laquelle la composition de revêtement comprend en outre un solvant.

4. Feuille décorative selon l'une quelconque des revendications 1 à 3, dans laquelle la couche de résine transparente comprend une résine polyester.

5. Panneau décoratif, qui se **caractérise en ce que** la feuille décorative selon l'une quelconque des revendications 1 à 4 est collée à un panneau de base en la collant avec un agent adhésif.
